# EUROPÄISCHE PATENTANMELDUNG

(11) **EP 3 670 370 A1**
(43) Veröffentlichungstag der Anmeldung: **24.06.2020**
(21) Anmeldenummer: 19214767.6
(22) Anmeldetag: 10.12.2019
(51) Int. Cl.: B65D 1/10, B65D 3/22, B65D 13/00, B65D 25/14, B65D 43/02, B65D 65/46, A45D 40/00

(54) **VERPACKUNG FÜR KOSMETIKA**

(30) Priorität: 17.12.2018 DE 102018132513
(71) Anmelder: Awantys GmbH, 51674 Wiehl (DE)
(72) Erfinder: Wolansky, Carsten, 51674 Wiehl (DE)
(74) Vertreter: Lippert Stachow Patentanwälte Rechtsanwälte

(57) **Zusammenfassung**

Die Erfindung betrifft eine Verpackung (1) für insbesondere fluide, pastöse oder gelförmige Kosmetika, mit einem Behälter (2) mit einem Aufnahmeraum (3) für die Kosmetikzubereitung und mit einem Verschlussdeckel (4) zum Verschließen des Aufnahmeraumes (3), wobei Behälter (2) und Deckel (4) durch korrespondierende Befestigungsmittel (9, 10) reversibel aneinander festlegbar und der Behälter (2) reversibel verschließbar ist, wobei der Behälter (2) einen Behälterkorpus (5) und wobei der Deckel (4) einen Deckelkorpus (6) aufweist. Erfindungsgemäß weist der Aufnahmeraum (3) des Behälterkorpus (5) eine mediendichte Innenauskleidung (7) auf, wobei der Behälterkorpus, die Innenauskleidung (7) und der Deckelkorpus (6) jeweils unabhängig voneinander zumindest im Wesentlichen aus einem recycelten und/oder biologisch abbaubarem, insbesondere kompostierbaren, Material bestehen.

## Beschreibung

Die Erfindung bezieht sich auf eine Verpackung für insbesondere fluide, pastöse oder gelförmige Kosmetika, mit einem Behälter mit einem Aufnahmeraum für die Kosmetikzubereitung und mit einem Verschlussdeckel zum Verschließen des Aufnahmeraumes, wobei Behälter und Deckel durch korrespondierende Befestigungsmittel reversibel aneinander festlegbar und der Behälter reversibel verschließbar ist, wobei der Behälter einen Behälterkorpus und wobei der Deckel einen Deckelkorpus aufweist.

Derartige Verpackungen mit Verschlussdeckel für Kosmetika sind allgemein bekannt, beispielsweise zur Bevorratung von Cremes oder anderen fluiden, pastösen oder gelförmigen Kosmetikzubereitungen. Beispielsweise kann die Verpackung in Art eines Tiegels mit Verschlussdeckel wie beispielsweise Schraubdeckel ausgebildet sein. Hierbei wird die Verpackung nach dem Stand der Technik, welche allgemein im Rahmen der Erfindung als Primärverpackung für die Kosmetikzubereitung zu verstehen ist und welche die Kosmetikzubereitung unmittelbar aufnimmt, zumeist aus einem Kunststoffmaterial, gegebenenfalls auch aus Glas hergestellt. Da die Kosmetikzubereitung jedoch ein Verbrauchsmaterial ist, sind die geleerten Verpackungen dann anschließend zu entsorgen. Die Entsorgung durch den Verbraucher erfolgt hierbei jedoch oftmals über den Restmüll, was jedoch der heutzutage zunehmenden Bedeutung einer nachhaltigen Wirtschaft bzw. nachhaltiger Warenkreisläufe nicht mehr ausreichend Rechnung trägt. So sind derartige Primärverpackungen für Kosmetika oftmals nicht dem Entsorgungssystem des Grünen Punktes zugänglich. Die Herstellung von Verpackungen aus Glas bedingt jedoch ein hohes Behältergewicht und damit auch hohe Transportkosten.

Andererseits ist bei einer Kosmetikprimärverpackung in besonderer Weise dafür Sorge zu tragen, dass einerseits nicht die Verpackung durch die aufgenommene Kosmetikzubereitung beeinträchtigt wird, dass aber insbesondere auch die Kosmetikzubereitung nicht durch das Verpackungsmaterial beinträchtig wird, insbesondere auch in Bezug auf die sensorischen Eigenschaften des Kosmetikums.

Der Erfindung liegt daher die Aufgabe zu Grunde, eine Verpackung im Sinne einer Primärverpackung für Kosmetikzubereitungen bereitzustellen, welche in besonderem Maße die Erfordernisse einer nachhaltigen Verpackung erfüllt und welche zur Aufnahme von Kosmetikzubereitungen besonders geeignet ist.

Die Aufgabe wird erfindungsgemäß durch eine Verpackung im Sinne einer Primärverpackung zur Aufnahme einer Kosmetikzubereitung gelöst, bei welcher der Aufnahmeraum des Behälterkorpus für die Kosmetikzubereitung eine mediendichte Innenauskleidung aufweist und wobei der Behälterkorpus, die Innenauskleidung und der Deckelkorpus jeweils unabhängig voneinander aber besonders bevorzugt in Kombination miteinander zumindest im Wesentlichen oder vorzugsweise vollständig aus einem recycelten und/oder biologisch abbaubaren Material bestehen. Dadurch, dass der Aufnahmeraum mit einer mediendichten Innenauskleidung, also einer in Bezug auf die Kosmetikzubereitung dichten Innenauskleidung versehen ist, wird das Korpusmaterial von Behälter bzw. Deckel durch die Innenauskleidung von dem Kosmetikum getrennt und Behälter- und/oder Deckelkorpus können aus Materialien bestehen, welche an sich nicht mit dem Kosmetikum kompatibel sind, beispielsweise dass sich durch Aufnahme von Bestandteilen wie Wasser, Fetten oder dergleichen aus dem Kosmetikum das Korpusmaterial unerwünscht ändert oder dass das Kosmetikum durch Aufnahme von Bestandteilen aus dem Korpus unerwünscht verändert wird, beispielsweise auch in sensorischer Hinsicht. Dadurch, dass der Behälterkorpus, die Behälterinnenauskleidung und der Deckelkorpus jeweils unabhängig voneinander, vorzugsweise die genannte drei Behälterbestandteile in Kombination miteinander, zumindest im Wesentlichen aus einem recycelten und/oder biologisch abbaubaren Material bestehen, weist die Verpackung insgesamt jedoch eine hohe Nachhaltigkeit auf. Dies gilt insbesondere, wenn das jeweilige Material gleichzeitig ein recyceltes als auch ein biologisch abbaubares, insbesondere kompostierbares, Material ist, wie beispielsweise Zellstoff, Zellulose oder Zellstoffmaterial oder andere biologisch abbaubare bzw. kompostierbare Rohstoffe, vorzugsweise solche auf Basis natürlicher bzw. nachwachsender Rohstoffe. Derartige erfindungsgemäße Primärverpackungen für Kosmetika sind derzeit noch nicht bekannt, so dass durch Bereitstellung des Erfindungsgegenstandes erstmalig eine besonders nachhaltige Primärverpackung für Kosmetika bereitgestellt wird. Allgemein bevorzugt gelten die Ausführungen zu der Behälterinnenauskleidung bzw. Behälterinnenauskleidungsteil unabhängig auch für eine etwaige vorhandene Deckelinnenauskleidung bzw. Deckelinnenauskleidungsteil.

Dass der Behälterkorpus, Behälterinnenauskleidung und der Deckelkorpus zumindest im Wesentlichen aus einem recycelten und/oder biologisch abbaubaren Material bestehen, heißt, dass anderweitige Materialien besonders bevorzugt allenfalls in einem geringen Anteil (Gewichts- und/oder Volumenanteil) in dem jeweiligen Verpackungsteil vorgesehen sind, welcher einem erneuten Recyclingvorgang bzw. einem Kompostierungsvorgang nicht entgegenstehen würde. Vorzugsweise besteht das jeweilige Teil von Behälterkorpus, Innenauskleidung und/oder Deckelkorpus, jeweils unabhängig voneinander zu ≥ 75% oder ≥ 85%, besonders bevorzugt ≥ 95% oder ≥ 98% oder insbesondere vollständig aus einem derartigen recycelten und/oder biologisch abbaubaren (vorzugsweise auch kompostierbarem) Material. Diese Werte können sich jeweils auch auf die Kombination von Behälterkorpus und Deckelkorpus, bevorzugt auch einschließlich der Behälterinnenauskleidung und besonders bevorzugt auch auf die Verpackung insgesamt beziehen. Weiter bevorzugt gelten die genannten Werte für die genannten Teilbereiche der Verpackung oder insbesondere die Verpackung insgesamt in Bezug auf ein biologisch abbaubares bzw. kompostierbares Material, was besondere Vorteile in Bezug auf die Nachhaltigkeit bedingt. Gegebenenfalls können einzelne Teilbereiche der Verpackung wie beispielsweise Beschichtungen, Imprägnierungen, Klebstoffe, besondere Dichtbereiche oder Dichtungsmaterialien, beispielsweise auch Siegelfolien zum Verschließen des Aufnahmeraumes, aus nicht recyceltem sowie nicht biologisch abbaubarem Material bestehen, auch wenn dies weniger bevorzugt ist. Besonders bevorzugt bestehen jeweils Behälterkorpus, Innenauskleidung und/oder Deckelkorpus aus einem recycelten Material, welches auch biologisch abbaubar, vorzugsweise auch kompostierbar, ist, insbesondere auch in Kombination von Behälterkorpus und Deckelkorpus oder weiter bevorzugt in Kombination von Behälterkorpus, Innenauskleidung und Deckelkorpus.

Die Angaben zu Anteilen der Materialzusammensetzung einzelner Bestandteile der Verpackung oder der Verpackung insgesamt bezieht sich allgemein im Rahmen der Erfindung auf Gewichtsanteile, sofern sich im Einzelnen nichts anderes ergibt.

Vorzugsweise ist das recycelte Material zumindest teilweise oder praktisch vollständig ausgewählt aus der Gruppe von recyceltem Material auf Basis nachwachsender Rohstoffe, insbesondere derartiges Fasermaterial oder partikelförmiges Material, tierischem Material und recyceltem Kunststoff oder Kombinationen derselben, insbesondere organisches und/oder tierisches Material auf Basis nachwachsender Rohstoffe. Vorzugsweise ist das recycelte Material nicht ein solches auf Basis fossiler Rohstoffe. Das recycelte, insbesondere organische und/oder tierische, Material ist jeweils vorzugsweise ein solches auf Basis von Material natürlichen Ursprungs oder natürliches Material, insbesondere Pflanzenmaterial, gegebenenfalls auch tierisches Material wie Wolle oder Haare. Durch das Materialrecycling ist bereits ein wesentlicher Aspekt der Nachhaltigkeit der Verpackung realisiert. Das Fasermaterial kann insbesondere ein organisches Fasermaterial wie Pflanzenfasermaterial sein, insbesondere auch Zellulose oder Zellstoff. Das recycelte Material kann somit beispielsweise aus Altpapier (einschließlich Pappe und Karton), Alttextilien oder dergleichen hergestellt sein. Generell können aber auch andere recycelte Materialien wie sonstige partikelförmige oder granulatförmige Materialien eingesetzt werden. Gegebenenfalls können diese mit einem Klebstoff oder Bindemittel zur Ausbildung des jeweiligen Teils der Verpackung wie Behälter- und/oder Deckelkorpus verbunden sein, wobei der Klebstoff bzw. Bindemittel vorzugsweise ein kompostierbares Material wie Stärke, Kasein oder dergleichen ist. Vorzugsweise ist jedoch der Anteil an Kunststoff, einschließlich recyceltem Kunststoff, an dem Gesamtgewicht der Verpackung ≤ 50% oder ≤ 20% oder ≤ 10%, vorzugsweise ≤ 5% oder ≤ 2% oder praktisch vernachlässigbar.

Als "biologisch abbaubar" sei im Rahmen der Erfindung insbesondere ein Material verstanden, welches nach OECD 302 inhärent biologisch abbaubar oder nach OECD 301 leicht biologisch abbaubar ist, wobei letzteres bevorzugt ist. Das Material nach OECD 302 kann insbesondere die Erfordernisse nach OECD 302 A und/oder OECD 302 B und/oder OECD 302 C erfüllen.

Das Material nach OECD 301 kann insbesondere die Erfordernisse nach OECD 301 A und/oder OECD 301 B erfüllen. Vorzugsweise ist das recycelte Material jeweils ein solches, welches aus nachwachsenden Rohstoffen hergestellt ist oder besteht. Die nachwachsenden Rohstoffe können jeweils nachträglich chemisch modifiziert sein, vorzugsweise sind diese nicht nachträglich modifiziert.

Vorzugsweise ist das recycelte Material, auch nach gegebenenfalls erfolgter chemischer Modifizierung, jeweils ein biologisch abbaubares Material, besonders bevorzugt ein kompostierbares Material. Als solche Materialien können beispielsweise geeignete Polyester, Polyamide, Polylactid, Polyhydroxybutyrat (PHB), Polyhydroxyvalerat (PHV) einsetzt werden. Auf die im Rahmen der Erfindung beschriebenen biologisch abbaubaren bzw. kompostierbaren Materialien sei verwiesen.

Besonders bevorzugt ist das jeweilige biologisch abbaubare bzw. kompostierbare Material zugleich ein solches auf Basis von oder aus nachwachsenden Rohstoffen.

Vorzugsweise bestehen die Verpackung insgesamt, Behälterkorpus und/oder Deckelkorpus und/oder die Behälterinnenauskleidung unabhängig voneinander oder in Kombination miteinander zu ≥ 50% oder vorzugsweise ≥ 75% oder ≥ 80%, besonders bevorzugt zu ≥ 90% oder ≥ 98%, besonders bevorzugt praktisch vollständig aus recyceltem Material. Besonders bevorzugt ist das recycelte Material mit den genannten Anteilen auch biologisch abbaubar bzw. kompostierbar.

Besonders bevorzugt ist das biologisch abbaubare bzw. kompostierbare Material der Verpackung zumindest teilweise oder vollständig eines der Materialien von Pflanzenbestandteilen, einschließlich makroskopische Teile von Pflanzen wie Blatt- und/oder Stängelmaterial, Pflanzenfasermaterial wie beispielsweise auch von Hanf, Sisal, Baumwollfasern, Flachsfasern oder dergleichen, Zellulose (gegebenenfalls einschließlich chemisch modifizierte Zellulose, bevorzugt nicht chemisch modifizierte Zellulose) oder Zellstoff, Gras oder Bestandteile desselben wie insbesondere Blätter, Stroh, Holzbestandteile wie insbesondere Holzfasern oder Holzpartikel wie Späne, Getreide, Stärke und Stärkeblends, einschließlich modifizierte Stärke und/oder thermoplastische Stärke (gegebenenfalls ausgenommen modifizierte Stärke), Proteine oder Proteinblends, Polymilchsäure (PLA), Polyhydroxyalkanate, wie beispielsweise Polyhydroxybuttersäure (PHB) oder Polyhydroxyvaleriansäure (PHV), Lignin, Chitin, Kasein, Gelatine oder Kombinationen derselben. Besonders bevorzugt ist das Material eines der Materialien von Pflanzenbestandteilen (insbesondere in Form von Pfanzenfasermaterialien), Zellulose, Stärke, Stärkeblends. Weiter besonders bevorzugt ist das Material Zellulose und/oder Stärke, einschließlich Stärkeblends. Allgemein bevorzugt ist das Material auch Pflanzenfasern. Als "Gras" sei allgemein die Kategorie der Pflanzengräser verstanden, einschließlich Süßgräser und Bambus sowie Sauergräser wie Riedgräser und Binsengewächse. Die jeweiligen Pflanzenbestandteile können in makroskopischer Form vorliegen, so dass diese durch Augenscheinnahme optisch noch als Pflanzenbestandteile erkennbar sind, vorzugsweise aber in Form mikroskopischer Pflanzenbestandteile wie Fasern oder dergleichen. Besonders bevorzugt ist auch Graskarton, welcher ein Kombinations- bzw. Verbundmaterial von zerkleinerten Grasbestandteilen wie Blättern und Zellulose oder Zellstoff ist. Einzelne Partikel von Pflanzenbestandteilen können durch ein Klebemittel miteinander verbunden sein, welches vorzugsweise ebenfalls ein biologisch abbaubares Klebemittel darstellt. Die eingesetzten Pflanzenbestandteile weisen vorzugsweise in ihrer Haupterstreckungsrichtung eine Ausdehnung von ≤ 5mm oder ≤ 1mm auf, ohne hierauf beschränkt zu sein, so dass die Ausbildung der Geometrie der Verpackung nicht durch die Partikelgröße der Pflanzenbestandteile beschränkt wird, ohne dass eine aufwändige nachträgliche Materialbearbeitung der Verpackung erforderlich wäre. Besonders bevorzugt ist das kompostierbare Material ausgewählt aus der Gruppe von Papier, Pappe, Karton. Behälterkorpus und/oder Deckelkorpus und/oder die Behälterinnenauskleidung bestehen jeweils unabhängig voneinander oder in Kombination miteinander zu ≥ 30%, ≥ 50% oder vorzugsweise ≥ 75% oder ≥ 80%, besonders bevorzugt zu ≥ 90% oder ≥ 98%, besonders bevorzugt praktisch vollständig aus einem der oben genannten Materialien bzw. der genannten Kombinationen oder Materialgruppen.

Das biologisch abbaubare bzw. kompostierbare Material kann allgemein im Rahmen der Erfindung jeweils ein recyceltes Material sein, wie beispielsweise recyceltes Papier, Pappe oder dergleichen. Allgemein, weniger bevorzugt, kann das kompostierbare Material auch ein Rohmaterial, also erstmalig gegebenenfalls industriell hergestelltes Material sein.

Vorzugsweise bestehen die Verpackung insgesamt, Behälterkorpus und/oder Deckelkorpus und/oder die Behälterinnenauskleidung unabhängig voneinander oder in Kombination miteinander zu ≥ 30%, ≥ 50% oder vorzugsweise ≥ 75% oder ≥ 80%, besonders bevorzugt zu ≥ 90% oder ≥ 98%, besonders bevorzugt praktisch vollständig aus biologisch abbaubarem bzw. kompostierbarem Material.

Als kompostierbares Material sei insbesondere ein solches verstanden, bei welchem die Kompostierung bzw. Verrottung innerhalb eines Jahres, vorzugsweise in einem Zeitraum von kleiner/gleich sechs Monaten oder kleiner/gleich zwei Monaten erfolgt, wobei die Kompostierung unter geeigneten Bedingungen zusammen mit anderen üblicherweise kompostierbaren Materialien oder ohne diese erfolgen kann. Das kompostierbare Material ist allgemein im Rahmen der Erfindung vorzugsweise kein synthetisch hergestelltes Kunststoffmaterial. In Bezug auf die Kompostierbarkeit kann das jeweilige Verpackungsteil bzw. die Verpackung insgesamt die Erfordernisse der europäischen Norm EN 13432 erfüllen, insbesondere wonach mindestens 90% des organischen Kohlenstoffs des Materials in einem Prüfzeitraum von max. 180 Tagen umgesetzt werden, und/oder DIN EN 14995 und/oder die Erfordernisse der ASTM D 6400 erfüllen.

Sämtliche Normen im Rahmen der Erfindung beziehen sich insbesondere auf die Fassung dieser jeweiligen Norm mit Gültigkeit zum 1. September 2018.

Vorzugsweise bestehen (i) Behälterkorpus und Behälterinnenauskleidung oder (ii) Behälter, Innenauskleidung und Deckel jeweils aus Materialien aus derselben Gruppe von biologisch abbaubarem, insbesondere kompostierbarem, Material oder aus der Gruppe von recyceltem Material. Das biologisch abbaubare, insbesondere Kompostierbare Material, ist besonders nachhaltig, so dass der gesamte genannte Verpackungsteil (i) oder (ii) einheitlich der Kompostierung zugeführt werden kann. Bestehen die genannten Verpackungsteile (i) oder (ii) aus der Gruppe von recyceltem Material, so kann ebenfalls der genannte Verpackungsteil zusammenhängend dem Recycling zugeführt werden. Vorzugsweise bestehen hierbei die Verpackungsteile (i) oder (ii) aus recyceltem Material aus nachwachsenden Rohstoffen wie Pflanzen- und/oder tierischen Materialien, insbesondere Pflanzenmaterial, oder andererseits aus der Untergruppe von recyceltem Kunststoffmaterial. Die einheitliche Entsorgung der genannten Verpackungsteile ist hierdurch besonders einfach möglich. Die genannte Ausbildung der Verpackung findet ferner beim Verbraucher eine hohe Akzeptanz in Bezug auf die jeweilige Entsorgung.

Bevorzugt weist auch der Deckelkorpus eine Innenauskleidung auf, welche auch als Auskleidungsteil ausgebildet sein kann. Hierdurch wird das Deckelinnere von der Kosmetikzubereitung besonders geschützt, sofern der Behälter erstmalig geöffnet und beispielsweise ein Originalverschluss in Form einer Siegelfolie entfernt oder geöffnet wurde. In Bezug auf die Ausbildung der Deckelinnenauskleidung sei jeweils im Rahmen der Erfindung vollumfänglich auf die Ausführungen zu der Behälterinnenauskleidung Bezug genommen, wobei anstelle des Behälters dann der Deckel zu betrachten ist. Die Ausgestaltungen von Behälterinnenauskleidung und Deckelinnenauskleidung können unabhängig voneinander gelten, vorzugsweise sind jedoch die jeweiligen Merkmale in Bezug auf Behälterinnenauskleidung und Deckelinnenauskleidung gleichzeitig verwirklicht.

Allgemein im Rahmen der Erfindung kann das Auskleidungsteil von Behälter und/oder Deckel als separater Körper getrennt von dem jeweiligen Korpus herstellbar sein, also beispielsweise in Abgrenzung zu einer Beschichtung des Korpus. Vorzugsweise weist das Behälter- und/oder Deckelauskleidungsteil eine mechanische Stabilität auf, so dass dieses an sich, also ohne Unterstützung durch ein anderes Bauteil, formstabil ist.

Vorzugsweise ist die Innenauskleidung des Behälteraufnahmeraums als Innenauskleidungsteil ausgebildet, welches an dem Behälterkorpus und/oder Deckelkorpus festgelegt ist, um dieses an dem jeweiligen Korpus zu sichern bzw. in seiner Lage zu fixieren. Hierdurch kann die Innenauskleidung in besonderer Weise daran angepasst werden, dass in dem Aufnahmeraum angeordnete Kosmetikum von dem Material des Behälterkorpus bzw. Deckelkorpus zu separieren. Ferner ist hierdurch der Korpus von Behälter bzw. Deckel unabhängig von dem Innenauskleidungsteil herstellbar, so dass auch die Materialauswahl oder das Herstellungsverfahren für den jeweiligen Korpus unabhängig von dem Innenauskleidungsteil ausgewählt sein und in Bezug auf die Nachhaltigkeit der Verpackung besonders optimiert sein kann. Gegebenenfalls kann die Innenauskleidung von Behälter-und/oder Deckelkorpus jedoch auch als Beschichtung oder Imprägnierung desselben ausgebildet sein, wobei das Beschichtungs- bzw. Imprägnierungsmaterial vorzugsweise ein kompostierbares bzw. biologisch abbaubares Material ist. Das Beschichtungs- bzw. Imprägnierungsmaterial kann beispielsweise ein biologisch abbaubares synthetisches oder vorzugsweise natürliches Material (gegebenenfalls auch modifiziertes natürliches Material) sein. Beispielsweise kann eine Beschichtung aus einem natürlichen Harz oder aber gegebenenfalls auch Wasserglas gegeben sein. Hierfür geeignete biologisch abbaubare bzw. kompostierbare Kunststoffmaterialien auf Basis von Estern, Amiden, Polysacchariden oder dergleichen sind bekannt. Ferner kann die Innenauskleidung, insbesondere in Form als Innenauskleidungsteil, dazu dienen, den Aufnahmeraum für das Kosmetikum von einer Hohlraumstruktur oder Porenstruktur des jeweiligen Korpus abzutrennen, beispielsweise wenn der jeweilige Korpus eine makroskopische Hohlraumstruktur wie beispielsweise bei einer Wellpappe aufweist. Entsprechendes kann jeweils unabhängig hiervon oder in Kombination hiermit für eine Innenauskleidung des Deckels gelten.

Ein Material mit makroskopischer Hohlraumstruktur im Sinne der Erfindung ist insbesondere ein solches, bei welchem die Hohlraumstruktur durch Inaugenscheinnahme einer Person optisch erfassbar ist, gegebenenfalls unter Aufschneidung des jeweiligen Bauteils wie eines Korpus. Insbesondere kann die Hohlraumstruktur Hohlraumkanäle aufweisen, welche sich gegebenenfalls auch durchgehend über eine Erstreckungsrichtung des Korpus erstrecken können. Eine derartige Hohlraumstruktur ist insbesondere bei Wellpappe vorgesehen, ohne jedoch hierauf beschränkt zu sein. Beispielsweise können auch Röhren mit entsprechendem Hohlraum miteinander verbunden, beispielsweise verklebt sein, um den jeweiligen Korpus auszubilden. Diese Röhren können einen runden aber auch eckigen, beispielsweise rechteckigen oder quadratischen oder sechseckigen Querschnitt aufweisen, um den jeweiligen Korpus auszubilden. Die Röhren können beispielsweise miteinander verklebt und oder durch andere Befestigungsmittel aneinander festgelegt sein, um den Korpus auszubilden. Beispielsweise kann der Korpus auch in Art einer Wabenstruktur mit entsprechenden Hohlräumen ausgebildet sein. Die Hohlräume können beispielsweise eine Weite im Bereich von 0,1 mm bis 5 mm aufweisen, oder im Bereich von 0,5 mm bis 3 mm, ohne hierauf beschränkt zu sein.

Besonders bevorzugt ist das Innenauskleidungsteil von Behälter und/oder Deckel form- und/oder kraftschlüssig an dem jeweiligen Korpus festgelegt, weiter bevorzugt lösbar befestigt. Hierdurch kann gegebenenfalls zur Entsorgung der Verpackung das Innenauskleidungsteil leicht von dem Behälter- bzw. Deckelkorpus manuell von dem Verbraucher abgetrennt werden, um die einzelnen Verpackungsteile sachgerecht zu entsorgen. Gegebenenfalls kann das jeweilige Innenauskleidungsteil aber auch mit dem jeweiligen Behälter- bzw. Deckelkorpus verklebt sein. Vorzugsweise wird hierbei ein organisch abbaubarer Klebstoff eingesetzt. Ein solcher Klebstoff kann beispielsweise auf Basis von Stärke, Kasein oder derartigen Blends formuliert sein, ein aus natürlichem Material hergestellter Leim oder beispielsweise ein unter dem Handelsnamen "EPOTAL ® ECO" der BASF vertriebener Klebstoff darstellen. Auf diese Klebstoffe sei auch allgemein im Rahmen der Erfindung in Bezug auf die Verwendung von bevorzugten Klebstoffen verwiesen. Beispielsweise können derartige Klebstoffe auch als Beschichtungsmaterial zur Herstellung einer Innenauskleidung von Behälter- und/oder Deckelkorpus eingesetzt werden oder zur Befestigung einer Innenauskleidung aus einem anderen Material an dem jeweiligen Korpus.

Zur formschlüssigen Befestigung eines Innenauskleidungsteils an dem jeweiligen Korpus kann das Auskleidungsteil auch einen radial nach außen gerichteten Kragen aufweisen, welcher einen Korpusbereich übergreift. In einer Weiterbildung kann eine Decklage vorgesehen sein, welche die Auskragung des Auskleidungsteils übergreift und dieses hierdurch an dem jeweiligen Korpus verklebt oder anderweitig befestigt und/oder einen optischen Anschluss des Auskleidungsteils zum Korpus ausbildet. Die Decklage kann aus dem Korpusmaterial oder einem anderen recycelten und/oder biologisch abbaubarem, insbesondere kompostierbaremn, Material bestehen. Gegebenenfalls kann das jeweilige Auskleidungsteil auch im Klemmsitz an dem jeweiligen Korpus festgelegt sein.

Allgemein kann das Innenauskleidungsteil im Bereich seiner Aufnahmeöffnung für das Kosmetikum eine ringförmige Lage eines Materials aufweisen, welche die Öffnung umfänglich umgibt und die Anhaftung einer Siegelfolie zum Verschluss des Aufnahmeraums ermöglicht. Die Befestigung der Siegelfolie kann beispielsweise durch Verkleben oder durch Verschweißen erfolgen. Der ringförmige Materialbereich kann dauerhaft mit der Auskleidung bzw. dem Auskleidungsteil verbunden sein, beispielsweise durch Anhaften oder Verkleben. Das ringförmige Material kann ebenfalls aus einem recycelten und/oder biologisch abbaubaren Material bestehen, beispielsweise einem biologisch abbaubaren Kunststoff.

Nach einer besonders bevorzugten Variante I besteht der Behälter-und/oder Deckelkorpus zumindest zu einem wesentlichen Teil aus vorgefertigten Schichtabschnitten eines recyceltem und/oder biologisch abbaubarem, insbesondere kompostierbarem, Materials, wobei die genannten Abschnitte dauerhaft miteinander verbunden sind, beispielsweise durch Verkleben, besonders bevorzugt durch Verkleben miteinander mit einem biologisch abbaubarem bzw. kompostierbaren Klebstoff. Durch den Schichtaufbau kann der jeweilige Korpus praktisch eine beliebige Formgestalt einnehmen, nämlich durch entsprechende Bemessung der einzelnen Schichtabschnitte. Die Schichtabschnitte, vorzugsweise nur eine Untergruppe derselben, können ferner jeweils in deren Zentrumsbereich eine Ausnehmung aufweisen, so dass durch Übereinanderlagerung der einzelnen Schichtabschnitte eine Aufnahme des Korpus für eine Innenauskleidung bzw. ein Innenauskleidungsteil ausgebildet werden kann. Vorzugsweise ist mindestens ein Schichtenabschnitt oder eine Anzahl mehrerer unmittelbar aufeinanderfolgender Schichtenabschnitte, welche in einer Stapelrichtung aufeinander gestapelt sind, über die Ausdehnung des jeweiligen Abschnittes durchgehend, also durchbrechungsfrei, ausgebildet. Diese Schichtenabschnitte können einen Bodenbereich des Behälterkorpus bzw. durchgehende Oberseite eines Deckelkorpus ausbilden. Ein derartiges Schichtenmaterial kann insbesondere eine Pappe oder mehrlagiges Schichtmaterial mit Hohlräumen oder Kanälen wie Wellpappe (vorzugsweise aus einem Zellulosematerial aber nicht hierauf beschränkt) sein oder eine Schicht aus einem anderen faserhaltigen Material oder Fasermaterial. Bei dem faserhaltigen Material bzw. Fasermaterial können die einzelnen Fasern gegebenenfalls ohne Klebemittel miteinander verbunden sein, beispielsweise durch Verpressen oder Verfilzen oder es kann ein Klebstoff eingesetzt werden, dann vorzugsweise ein biologisch abbaubarer Klebstoff.

Allgemein können die einzelnen vorgefertigten Schichtabschnitte somit in einer Stapelrichtung aufeinander gestapelt sein, wobei diese Abschnitte flächig mit ihren Ober- und Unterseiten aneinander aufliegen. Die Stapelrichtung kann sich parallel oder auch quer, beispielsweise senkrecht, zur Korpushauptachse erstrecken kann. Die Korpushauptachse durchsetzt hierbei die Öffnung des Aufnahmeraumes für das Kosmetikum.

Die jeweilige Ausnehmung der einzelnen Schichtabschnitte kann in die zunächst vereinzelten Schichtabschnitte angebracht werden, beispielsweise durch Schneiden oder Stanzen, und die Schichtabschnitte dann anschließend miteinander dauerhaft verbunden werden. Alternativ kann aus den einzelnen Schichtabschnitten auch zunächst ein Korpus ausgebildet werden und in diesen dann durch geeignete Materialbearbeitung wie Stanzen, Schneiden oder Fräsen die Ausnehmung in die Schichtabschnitte und damit der Aufnahmeraum des Korpus bzw. die Aufnahme für das Innenauskleidungsteil ausgearbeitet werden.

Der jeweilige Korpus kann zu einem wesentlichen Teil aus den besagten vorgefertigten Schichtabschnitten bestehen, beispielsweise zu ≥ 30% oder ≥ 50%, besonders bevorzugt ≥ 75% oder ≥ 85% oder ≥ 95% oder praktisch vollständig aus den besagten Schichtabschnitten, jeweils auf dessen Volumen bezogen (ohne den Aufnahmeraum). Hierdurch ist der Korpus in einem einheitlichen Herstellungsverfahren besonders einfach und wirtschaftlich herstellbar. Hierdurch kann der Korpus praktisch vollständig aus den besagten Schichtabschnitten bestehen, gegebenenfalls bis auf eine Verkleidung der Außenseite und/oder der oberen und/oder unteren Deckseite des Korpus. Zudem ist hierdurch der Korpus besonders nachhaltig. Gegebenenfalls kann der Korpus in Kombination mit der hier beschriebenen ersten bevorzugten Alternative in Teilbereichen auch aus der nachfolgend beschriebenen zweiten und/oder dritten Alternative bestehen.

Nach einer weiterhin besonders bevorzugten Variante II kann der Behälter- und/oder Deckelkorpus zumindest zu einem wesentlichen Teil aus einem Wickel eines vorgefertigten Schichtmaterials aus einem recycelten und/oder biologisch abbaubarem, insbesondere kompostierbarem, Material bestehen. In Bezug auf die Materialwahl des Schichtmaterials sei auf die bevorzugte Variante I verwiesen. Durch die Herstellung des Korpus aus einem Wickel ist dieser verfahrenstechnisch besonders einfach herstellbar. Hierbei kann beispielsweise die Wickellage des vorgefertigten Schichtmaterials einen Zuschnitt aufweisen, so dass bei Aufwickeln des Schichtmaterials der Korpus mit seinem Aufnahmeraum bzw. seiner Aufnahme für ein Innenauskleidungsteil hergestellt wird. Beispielsweise kann auch eine breitere Lage des Schichtmaterials aufgewickelt werden, wobei dieser Vorformling quer zur Längsrichtung des Vorformlings in einzelne Scheiben bzw. Segmente zerteilt wird, wobei aus jeder einzelnen Scheibe bzw. Segment ein Korpus hergestellt wird. Das Schichtmaterial kann hierbei auf einen Kern beispielsweise ein Rohr aufgewickelt werden, welches die Formgestalt des Aufnahmeraums bzw. der Aufnahme für das jeweilige Innenauskleidungsteil aufweisen kann. Gegebenenfalls kann der Wickel mit einer ober- und/oder unterseitigen Decklage versehen werden, um das optische Erscheinungsbild des Wickels bedarfsgerecht zu ändern. Weist das Schichtmaterial zur Herstellung des Wickels jedoch eine größere Materialstärke auf, so ist der Endbereich der Materiallage in der Regel zu bearbeiten, um einen kontinuierlichen Übergang des stirnseitigen Schichtendes mit der angrenzenden Wickellage auszubilden. Dies entfällt jedoch bei der oben beschriebenen Variante I, worin ein besonderer Vorteil derselben zu sehen ist. Dies gilt insbesondere bei Verwendung eines Schichtmaterials mit einer Poren- oder Hohlraumstruktur wie beispielsweise bei Wellpappe, wobei bei der Bearbeitung des Übergangs des Wickelendes zu der vorhergehenden Wickellage die Hohlraumstruktur des Materials offengelegt wird, was nachteilig ist. Nach einer Abwandlung dieser Variante kann der Korpus auch aus ineinander gesteckten Röhren bestehen, welche mit ihren Innen- und Außenseiten miteinander verbunden sein können, bspw. durch Verkleben.

Der jeweilige Korpus nach Variante II kann zu einem wesentlichen Teil aus dem besagten Wickel- bzw. Schichtaufbau besteht, beispielsweise zu ≥ 30% oder ≥ 50%, besonders bevorzugt ≥ 75% oder ≥ 85% oder ≥ 95% oder praktisch vollständig, jeweils auf dessen Volumen (ohne den Aufnahmeraum) bezogen. Dies kann in Bezug auf einen Korpus auch für eine Kombination der Varianten I und II gelten, wobei also zumindest ein Teilbereich des Korpus nach Variante I und zumindest ein anderer Teilbereich nach Variante II ausgebildet ist. Nach einer besonders bevorzugten Weiterbildung der Varianten I und II besteht der Korpus von Behälter und/oder Deckel zumindest zu einem wesentlichen Teil aus einem Material, insbesondere Fasermaterial, mit einer makroskopischen Hohlraumstruktur wie beispielsweise Wellpappe. Die Hohlraumstruktur kann hierbei größere Poren oder sich durch den Korpus erstreckende Kanäle aufweisen, wie beispielsweise bei Wellpappe aber auch anderen entsprechend konstruierten Materialien. Allgemein im Rahmen der Erfindung kann Bezug auf Wellpappe diese dreilagig ausgebildet sein, mit zwei ebenen außenseitigen Begrenzungslagen und einer mittleren gewellten Lage oder auch zweilagig mit einer ebenen Lage und einer an dieser festgelegten Welllage oder mit anderem Schichtaufbau. Die makroskopische Hohlraumstruktur des Korpus kann sich jeweils bis zu dessen Außenseite erstrecken, nämlich beispielsweise durch die Ränder der vorgefertigten Schichtabschnitte nach den Varianten I und II. Diese Hohlraumstruktur kann somit beispielsweise bei Variante I an der Außenumfangsfläche des jeweiligen Korpus vorgesehen sein, bei der Variante II an der Ober- und/oder Unterseite des Korpus. Besonders bevorzugt werden hierbei die zur Korpusaußenseite hin offenen Hohlräume der Hohlraumstruktur durch mechanische Verteilung des Fasermaterials an der jeweiligen Außenseite des Korpus verschlossen. Dass mechanisch verteilte Fasermaterial ist hierbei Teil des vorgefertigten Schichtmaterials, aus welchem der jeweilige Korpusabschnitt hergestellt ist. Durch die mechanische Verteilung des Fasermaterials wird somit das vorgefertigte Schichtmaterial des Korpus verteilt, ohne dieses von den Materialschichten des Korpus zu trennen, und hierdurch die außenseitigen Hohlräume verschlossen (dies bezieht sich auf das am Korpus verbleibende "verteilte" Material, nicht auf den Abrieb bei der mechanischen Bearbeitung). Diese "mechanische Verteilung" kann insbesondere dadurch erfolgen, dass die mit den Hohlräumen versehene Außenseite des Korpus abgeschliffen wird, beispielsweise durch Schmirgelpapier oder einen anderen Schleifkörper. Gegebenenfalls sind auch andere mechanische Bearbeitungen wie Verpressen oder Bürsten des Schichtmaterials an den Begrenzungskanten des Schichtmaterials an der Korpusaußenfläche möglich, wobei die Materialschicht unter Aufweitung der Schichtdicke verbreitert bzw. teilweise aufgebrochen wird. In einer besonders bevorzugten Weiterbildung erfolgt die mechanische Verteilung des Fasermaterials derart, dass die Fasern benachbarter Schichten verfilzen, insbesondere miteinander verfilzen, und hierdurch eine geschlossene Oberfläche unter Verschließung der Hohlräume ausbilden. Die besonderen Vorteile einer derartigen Verpackung sind zum einen ein besonders charakteristisches optisches Erscheinungsbild des Korpus. Ferner sind zur Verschließung der Hohlräume keine weiteren Materialien erforderlich, wie beispielsweise die Anbringung einer zusätzlichen Außenanlage wie auch in Form eines Etiketts, Versiegelung der Hohlräume durch Einbringung eines fluiden und aushärtenden Versiegelungsmittels oder dergleichen, wobei eine Versiegelung mit einem aushärtenden Versiegelungsmittel aufgrund der Hohlraumstruktur auch mit einem hohen Materialverbrauch verbunden wäre. Zudem kann die durch die mechanische Verteilung erzeugte Außenschicht des Korpus geprägt, bedruckt oder auf andere Weise verarbeitet werden, um die Außenseite der Verpackung herzustellen. Zudem hat es sich gezeigt, dass das mechanisch verteilte, insbesondere verfilzte, Fasermaterial der Korpusschichten zur Aufnahme von Stoffen wie Duftstoffen, Parfüms aber auch von Imprägnierungsmitteln geeignet sind. Der Korpus kann hierdurch Träger eines Duftstoffes sein, wobei sich herausgestellt hat, dass bei Verwendung natürlicher Fasermaterialien wie von Zellulose oder Pflanzenfasern wie Hanf, Sisal oder dergleichen die Duftcharakteristik des Parfüms nicht negativ beeinflusst wird. Aufgrund der besagten Hohlraumstruktur des Korpus weist dieser zudem ein besonders geringes Gewicht auf. Die beschriebene mechanische Bearbeitung unter "Verteilung" des Fasermaterials ist aber nicht auf Material mit makroskopischer oder sonstiger Hohlraumstrukturen beschränkt sondern kann insbesondere auch eingesetzt werden, um den Übergang zwischen benachbarten Schichten eines aus Schichten aufgebauten Korpus an der Korpusoberfläche zu vergleichmäßigen. Insbesondere kann also durch die mechanische Vergleichmäßigung das Material verschiedener bzw. benachbarter Schichten des jeweiligen Korpus miteinander verfilzt werden.

Nach einer weiteren besonders bevorzugten Variante III ist der Korpus von Behälter und/oder Deckel zumindest zu einem wesentlichen Teil als Faserformteil ausgebildet. Vorzugsweise ist hierbei der Korpus einstückig als derartiges Faserformteil ausgebildet. Als Faserformteil sei hierbei ein solches verstanden, wobei eine Faseraufschlämmung (Pulpe) auf einen die Form des Korpus abbildenden Träger aufgebracht wird, wobei der Träger Öffnungen aufweist, so dass die wässrige Phase der Faseraufschlämmung ablaufen kann und nach Trocknung des Vorformlings das Faserformteil ausgebildet wird. Gegebenenfalls können bei diesem Vorgang Klebemittel zugesetzt werden, vorzugsweise organisch abbaubare Klebemittel oder solche auf Basis recycelter Materialien, wozu auf die obigen Ausführungen zu vorteilhaft einsetzbaren Klebemitteln verwiesen wird, wie beispielsweise auf Stärke basierte oder Kasein basierte Klebemittel. Derartige Klebemittel sind aber nicht zwingend zu verwenden, deren Nichtverwendung ist verfahrenstechnisch und ökologisch besonders bevorzugt. Das derart hergestellte Faserformteil kann durch Verpressen oder anderweitige Materialbearbeitung weiterbearbeitet werden, um den endgültigen Korpus zu ergeben, auch mit der erforderlichen mechanischen Festigkeit. Ein derartiger Formteilkorpus kann in praktisch beliebiger Formgestalt hergestellt werden.

Allgemein im Rahmen der Erfindung können die Fasern eines Faserformkörpers zumindest im Wesentlichen oder vollständig biologisch abbaubare, insbesondere kompostierbare, Fasern und/oder solche aus recyceltem Material sein. Die Fasern sind allgemein bevorzugt solche aus nachwachsenden Rohstoffen, vorzugsweise Pflanzenfasern, bspw. Zellulosefasern.

Auch im Falle des besagten Faserformteils ist es besonderer Vorteil, dass dieses unmittelbar bedruckbar, geprägt oder dergleichen bearbeitet werden kann, um die Außenseite des gebrauchsfertigen Korpus auszubilden sowie auch unmittelbar zur Aufnahme von Duftstoffen, Parfüms oder gegebenenfalls auch Imprägnierungs- oder Beschichtungsmitteln fungieren kann, wobei besagte Imprägnierungs- und Beschichtungsmittel vorzugsweise in fluider Form auf das Faserformteil aufgebracht und anschließend zur Aushärtung gebracht werden können.

Es ist erfindungsgemäß auch möglich, verschiedene Bereiche des Korpus aus verschiedenen Faserformkörpern herzustellen, bspw. als Korpuskern und Korpusaußenverkleidung, wobei beide Formkörper unterschiedliche Eigenschaften wie bspw. eine unterschiedliche Dichte, unterschiedliche Imprägnierung usw. aufweisen können, wobei beispielsweise der Kern eine geringere spezifische Dichte und/oder geringere (oder keine Imprägnierung) aufweist und das Material der Außenverkleidung eine höhere Dichte und/oder stärkere Imprägnierung.

Außenverkleidung und Kern eines jeweiligen Korpus sind vorzugsweise verliersicher miteinander verbunden, beispielsweise im Klemmsitz, durch Verkleben oder durch anderweitige Befestigung. Vorzugsweise ist die Befestigung dauerhaft und nur zerstörend zu lösen.

Der jeweilige Korpus nach Variante III kann zu einem wesentlichen Teil als Faserformteil ausgebildet sein, beispielsweise zu ≥ 30% oder ≥ 50%, besonders bevorzugt ≥ 75% oder ≥ 85% oder ≥ 95% oder praktisch vollständig, jeweils auf dessen Volumen (ohne den Aufnahmeraum) bezogen, ohne hierauf beschränkt zu sein.

Besonders bevorzugt kann der jeweilige Behälter- und/oder Deckelkorpus jeweils unabhängig voneinander zumindest im Wesentlichen aus jeweils einer der bevorzugten Alternativen I, II oder III bestehen oder aus einer Kombination dieser Alternativen, beispielsweise der Alternativen I und II oder II und III oder aus einer Kombination der Alternativen I, II und III. Der "wesentliche Teil" des Korpus aus den jeweiligen Alternativen kann sich wie oben beschrieben in Bezug auf die Volumenanteile des Korpus ergeben.

Im Rahmen der Erfindung ist es auch möglich, eine Außenverkleidung des jeweiligen Korpus als Faserformteil auszubilden, wobei der Kern des Korpus nach Variante I oder Variante II oder auf andere Weise ausgebildet, beispielsweise um eine außenseitige Hohlraumstruktur des Korpuskerns außenseitig abzuschließen. Die Außenverkleidung kann beispielsweise hülsenförmig oder topfförmig ausgebildet sein, um den Kosrpuskern aufnehmen zu können. Der Korpusteil nach Variante III kann dann auch in einem geringeren Volumenteil in Bezug auf den Gesamtkorpus vorliegen, als oben bevorzugt angegeben.

Vorzugsweise ist die Innenauskleidung von Behälter- und/oder Deckelkorpus als Innenauskleidungsteil ausgebildet, welches einen Faserformkörper darstellt. Hierdurch kann das Innenauskleidungsteil auf einfache Weise in praktisch beliebiger Formgestalt als Teil einer nachhaltigen Verpackung ausgebildet werden. Insbesondere umfasst hierbei das Innenauskleidungsteil Befestigungsmittel zur reversiblen Festlegung des anderen Korpusteils von Behälter und Deckel, um die Verpackung zu verschließen. Befestigungsmittel können insbesondere als Formschlussmittel ausgebildet sein, besonders bevorzugt als Schraubgewinde. Weiterhin kann das Innenauskleidungsteil einen sich radial auswärts erstreckenden Flansch aufweisen, welcher im oberen Randbereich des Auskleidungsteils bzw. im Bereich der Aufnahmeöffnung des Auskleidungsteils für die Kosmetikzubereitung angeordnet ist. Dieser Flansch kann einen angrenzenden Bereich des jeweiligen Korpus übergreifen, um einen kontinuierlichen und durchbrechungsfreien Übergang vom Auskleidungsteil zum Korpus hin auszubilden. Ferner kann das jeweilige Auskleidungsteil Befestigungsbereiche aufweisen, um dieses an dem jeweiligen Korpus insbesondere kraft-und/oder formschlüssig festlegen zu können. Das Innenauskleidungsteil kann hierbei beispielsweise im Klemmsitz an dem Korpus festgelegt sein, beispielsweise durch entsprechende Bemaßung eines Abschnittes des Innenauskleidungsteils sowie der korrespondierenden Aufnahme des Korpus. Alternativ oder zusätzlich kann das Innenauskleidungsteil auch Vorsprünge wie beispielsweise einen umlaufenden Wulst oder zumindest einen oder mehrere andere Vorsprünge aufweisen, welche einen korrespondierenden Abschnitt des Korpus hintergreifen können, um das Auskleidungsteil in Bezug auf ein Lösen von dem Korpus an diesem zu sichern. Alternativ kann das Auskleidungsteil, gegebenenfalls auch mit der Ausbildung der zuvor beschriebenen konstruktiven Merkmale, aus einem recycelten Kunststoff bestehen. Durch die Ausbildung des Auskleidungsteils als Faserformkörper, beispielsweise aus Pflanzenfasern wie Zellulose oder Zellstoff oder dergleichen, kann der Faserformkörper aus einem biologisch abbaubarem bzw. kompostierbaren Material hergestellt werden und somit zusammen mit dem Korpus kompostiert werden, was eine hohe Nachhaltigkeit der Verpackung bedingt.

Besonders bevorzugt ist das Korpusmaterial von Behälter und/oder Deckel oberflächlich, d.h. an der Außenseite des jeweiligen Korpus, mit einem Imprägnierungsmittel und/oder einem Beschichtungsmittel versehen. Imprägnierungs- und/oder Beschichtungsmittel können hierbei insbesondere aus einem natürlichen Material und/oder einem biologisch abbaubaren, insbesondere kompostierbaren Material, gegebenenfalls auch aus einem recyceltem Kunststoff bestehen. Hierzu können beispielsweise geeignete natürliche Harze, Naturkautschuk oder gegebenenfalls auch Wasserglas oder insbesondere auch biologische abbaubare oder kompostierbare Kunststoffe wie geeignete Polyester, Polyamide oder dergleichen eingesetzt werden. Durch das Imprägnierungsmittel kann beispielsweise die Abriebbeständigkeit des Korpusmaterials erhöht werden oder das Aufnahmeverhalten von Druckfarbe oder dergleichen eingestellt werden. Durch die Verbesserung der Abriebeigenschaften des Korpus kann dieser insbesondere im automatisierten Verfahren industriell hergestellt, befüllt und/oder verschlossen werden. Entsprechendes gilt für ein Beschichtungsmaterial. Ferner kann hierdurch das Wasseraufnahmevermögen des Korpusmaterials verringert werden, beispielsweise wenn die Verpackung in feuchter Umgebung wie im Bad des Verbrauchers benutzt wird. Ferner kann ein derartiges Beschichtungsmittel eingesetzt werden, um die Innenauskleidung des Behälter- und/oder Deckelkorpus auszubilden. Gegebenenfalls kann hierzu in den Korpus eine Einlage eingebracht werden, um eine durchgehende Aufbringungsfläche für das Beschichtungsmittel bereitzustellen. Das Beschichtungsmittel kann bspw. auch als aushärtender Sprühkleber ausgebildet sein. Vorzugsweise bilden Imprägnierungs- und/oder Beschichtungsmittel eine atmungsaktive Ausrüstung des jeweiligen Substarts, insbesondere von Deckel- und/oder Behälterkorpus aus, um beispielsweise die Aufnahme eines Parfüms oder Duftstoffes durch das jeweilige Substrat zu ermöglichen.

Besonders bevorzugt ist das Innenauskleidungsteil von Behälter und/oder Deckelkorpus mit einem Imprägnierungsmittel und/oder einem Beschichtungsmittel versehen. Dies gilt insbesondere bei Ausbildung des jeweiligen Auskleidungsteils als Faserformkörper, aber auch aus einem anderen erfindungsgemäßen Material wie beispielsweise auch einem Schichtmaterial entsprechend den Ansprüchen 8-11 und deren Weiterbildungen.

Besonders bevorzugt ist das Innenauskleidungsteil von Behälter und/oder Deckelkorpus zumindest bereichsweise mit einem Imprägnierungsmittel und/oder einem Beschichtungsmittel versehen, insbesondere bei Ausbildung desselben als Faserformkörper. Zum einen ergeben sich hieraus dieselben Vorteile wie in Bezug auf den Behälter- und/oder Deckelkorpus mit Imprägnierungsmittel und/oder Beschichtungsmittel. Insbesondere kann im Falle des Innenauskleidungsteils von Behälter und/oder Deckel die Imprägnierungsmittel und/oder Beschichtungsmittel die Gleiteigenschaften der Oberfläche des jeweiligen Auskleidungsteils, insbesondere auch in Ausgestaltung als Faserformteil, verbessern, wozu dieses insbesondere im Bereich der Befestigungsmittel zur Festlegung des Deckels an dem Behälter vorgesehen sein kann. Bei reversibler Befestigung des Deckels wird somit Abrieb an den Befestigungsmitteln verringert, welcher ansonsten die Kosmetikzubereitung verunreinigen könnte. Ferner wird hierbei insbesondere bei Anordnung eines Schraubverschlusses das Auf- bzw. Abschrauben des Deckels wesentlich erleichtert. In Bezug auf die Auswahl des Imprägnierungs- und/oder Beschichtungsmittels sei auf die entsprechenden obigen Mittel in Zusammenhang mit dem Korpus verwiesen. Beispielsweise kann das Beschichtungsmittel ein Polyamid darstellen, welches einen vergleichsweise geringen Gleitreibungskoeffizienten aufweist.

Es versteht sich, dass allgemein die Innenauskleidung von Behälter und/oder Deckel, auch in Form eines Auskleidungsteils, aus einem recyceltem Kunststoffmaterial bestehen kann.

Generell können als Imprägnierungsmittel und/oder Beschichtungsmittel bei der erfindungsgemäßen Verpackung auch solche eingesetzt werden, welche nicht biologisch abbaubar und/oder recycelbar sind, da diese Mittel nur in einem vergleichsweise geringen Gewichtsanteil in Bezug auf das Gesamtgewicht der Verpackung eingesetzt werden, auch wenn dies weniger bevorzugt ist. Es versteht sich allgemein, dass das jeweilige Imprägnierungs- und/oder Beschichtungsmittel auch andere Bestandteile aufweisen kann, welche gegebenenfalls nicht biologisch abbaubar und/oder nicht recycelbar sind, wie beispielsweise Füllstoffe, gleitreibungsvermindernde Zusätze wie Teflon oder andere Bestandteile mit selbstschmierenden Eigenschaften, auch wenn dies weniger bevorzugt ist.

Vorzugsweise sind die einzelnen Verpackungsteile wie Behälterkorpus, Deckelkorpus und Innenauskleidungsteil von Behälter und/oder Deckel jeweils einstückig ausgebildet, was für diese Teile unabhängig voneinander oder in Kombination gelten kann.

Allgemein bevorzugt stehen somit die Befestigungsmittel von Behälterkorpus und/oder Deckelkorpus miteinander zumindest zu einem wesentlichen Teil oder vollständig aus einem gebundenen partikelförmigen Material, einschließlich Fasermaterial, wobei das Material zumindest oberflächlich imprägniert und/oder beschichtet ist. Allgemein im Rahmen der Erfindung sei bei unter einem "zumindest" oberflächlich imprägnierten und/oder beschichteten Material auch ein solches verstanden, welches nur oberflächlich imprägniert und/oder beschichtet ist. Die Partikel des besagten partikelförmigen Materials können hierbei in sich ohne Verwendung eines zusätzlichen Klebemittels gebunden sein, wie dieses bei einem Fasermaterial, insbesondere in sich verfilztem Fasermaterial, der Fall sein kann. Gegebenenfalls kann auch - weniger bevorzugt - zusätzlich ein Bindemittel wie Klebstoff eingesetzt werden, welcher vorzugsweise ein biologisch abbaubares/kompostierbares und/oder recycelbares Material darstellt, beispielsweise ein natürliches Harz, ein biologisch abbaubarer/kompostierbarer Kunststoff oder dergleichen. Auf die Ausführungen der besagten Befestigungsmittel allgemein im Rahmen der Erfindung sei verwiesen.

Nach einer besonders bevorzugten Ausführungsform ist die Innenauskleidung des Behälters als Innenauskleidungsteil ausgebildet, welches eine Mulde zur Aufnahme der Kosmetikzubereitung mit einem oberen Muldenrand aufweist, wobei am oberen Muldenrand eine zum Muldenboden hin offene U-förmige Rinne ausgebildet ist, und vorbei im Bereich des bzw. am oberen Muldenrandes Befestigungsmittel des Behälters angeordnet sind, welche mit korrespondierenden Befestigungsmitteln des Deckels zusammenwirken. Diese Befestigungsmittel können an der außenseitigen Wandung der U-förmigen Rinne angeordnet sein. Die Ausgestaltung einer Innenauskleidung des Deckels kann gegebenenfalls entsprechend ausgebildet sein. Es hat sich herausgestellt, dass eine derartige Innenauskleidung besonders bevorzugt ist, wenn diese aus einem biologisch abbaubarem, insbesondere kompostierbarem, und/oder recycelbarem Material besteht, insbesondere einem aus Partikeln wie insbesondere Fasern zusammengesetzten Material oder einem recycelten Kunststoff. Diese Ausgestaltung ist ferner besonders vorteilhaft, wenn der Korpus, an welchem das Innenauskleidungsteil befestigt ist, aus einem erfindungsgemäß eingesetzten Material besteht, welches im Wesentlichen aus Partikeln zusammengesetzt ist wie insbesondere ein Fasermaterial, welches insbesondere - aber nicht zwingend - eine Hohlraumstruktur wie beispielsweise Wellpappe aufweist kann, oder einem Fasermaterial wie insbesondere Faserformkörper ist, bei welchem nur vergleichsweise geringe oder keine Anteile an Bindemittel zur Verbindung der Fasern miteinander eingesetzt werden. Verglichen mit einem herkömmlichen Korpus aus einem Kunststoffmaterial weist ein erfindungsgemäßer Korpus unter Umständen eine geringere mechanische Festigkeit auf. Durch die besondere Ausgestaltung des Innenauskleidungsteils ist jedoch der obere Randbereich desselben besonders stabilisiert und somit eine stabile Befestigung des Innenauskleidungsteils an dem jeweiligen Korpus ermöglicht. Hierbei kann insbesondere das Innenauskleidungsteil die Befestigungsmittel wie beispielsweise ein Schraubgewinde aufweisen, wobei damit auch der Befestigungsbereich des Behälters oder entsprechend auch des Deckels stabilisiert wird. Eine bevorzugte Weiterbildung ist dadurch gegeben, dass der Behälterkorpus (oder bei einem Deckelinnenauskleidungsteil der Deckelkorpus) in die U-förmige Rinne des Innenauskleidungsteils eingreift. Hierdurch kann eine mechanisch stabile Verbindung von Korpus und Innenauskleidungsteil realisiert werden. Zudem kann hierdurch der obere Randbereich des Korpus durch den diesen überkragenden und außenseitig umgreifenden Bereich des Auskleidungsteils geschützt werden. Bei entferntem Deckel kann somit die außenseitige Wandung der U-förmigen Rinne des Auskleidungsteils einen Teil der Außenfläche des Behälters ausbilden. Zugleich kann der Korpusbereich, welcher in die U-förmige Rinne des Auskleidungsteils eingreift, zur Festlegung des Auskleidungsteils an dem Korpus dienen. Das Innenauskleidungsteil im Bereich der U-förmigen Rinne und der Behälterkorpus können hierbei kraft- und/oder formschlüssig, gegebenenfalls auch stoffschlüssig durch Verwendung entsprechender Klebemittel, aneinander festgelegt sein. Der in die U-förmige Rinne eingreifende Korpusbereich kann im Klemmsitz in der Innenseite der Rinne festgelegt sein. Alternativ oder zusätzlich können an dem Korpusbereich und der U-förmigen Rinne auch korrespondierende Formschlussmittel, beispielsweise Rastmittel, vorgesehen sein. Gegebenenfalls kann entsprechendes für die Ausbildung eines Deckels mit Auskleidungsteil gelten.

Die Ausbildung von Form- und/oder Kraftschlussmitteln am oberen Bereich des Innenauskleidungsteils bzw. im Bereich der U-förmigen Rinne desselben ist besonders bevorzugt, da hierdurch zugleich eine besonders kompakte Bauhöhe der Verpackung ermöglicht wird. Allgemein im Rahmen der Erfindung kann das Innenauskleidungsteil von Behälter- und/oder Deckelkorpus mit dem jeweiligen Korpus wechselseitig ineinandergreifende Vorsprünge und Vertiefungen zur Halterung des Innenauskleidungsteils an dem jeweiligen Korpus aufweisen. Die Vorsprünge bzw. Vertiefungen können auch an einem anderen Bereich des Auskleidungsteils bzw. Korpus angeordnet sein, beispielsweise in der Unterseite des Bodens des Auskleidungsteils, an einem unteren Bereich der Außenwand desselben oder dergleichen.

Allgemein im Rahmen der Erfindung können der Behälter- und/oder Deckelkorpus mit korrespondierenden Formschlussmittel zum Verschließen des Behälters durch den Deckel versehen sein, insbesondere in Ausbildung eines Schraubverschlusses.

Im Bereich von Behälter- und/oder Deckelkorpus mit dem jeweiligen Formschlussmittel kann insbesondere zumindest im Wesentlichen aus einem partikelförmigen Material, einschließlich Fasermaterial, bestehen, wobei die Materialpartikel gegebenenfalls durch ein Bindemittel miteinander verbunden sein können. Das Bindemittel bzw. Klebstoff besteht vorzugsweise aus einem biologisch abbaubarem, insbesondere kompostierbarem, und/oder recycelbaren Material, beispielsweise Naturharz, Kunststoff oder dergleichen. Gegebenenfalls, insbesondere bei Fasermaterial, kann ein derartiges Bindemittel nur in geringem Gehalt oder auch nicht vorgesehen sein. Das Material von Behälter- und/oder Deckelkorpus im Bereich der Befestigungsmittel ist vorzugsweise mit einem abriebvermindernden und/oder gleitreibungsvermindernden Material beschichtet oder imprägniert. Ein solches Material kann beispielsweise ein biologisch abbaubares bzw. kompostierbares Material wie Naturharz oder geeigneter Kunststoff, beispielsweise Polyamid, Polyester oder dergleichen sein.

Allgemein im Rahmen der Erfindung können die Befestigungsmittel zur Festlegung von Behälter und Deckel an dem Innenauskleidungsteil des Behälterkorpus und/oder Deckelkorpus vorgesehen sein. Insbesondere kann hierbei das jeweilige Innenauskleidungsteil als Faserformteil oder Schichtmaterial, insbesondere als solches mit einer makroskopischen Hohlraumstruktur wie beispielsweise Wellpappe ausgebildet sein.

Die Erfindung sei im Folgenden beispielhaft anhand von Ausführungsbeispielen beschrieben. Sämtliche Merkmale der jeweiligen Ausführungsbeispiele seien hierbei unabhängig voneinander oder in Kombination miteinander auch allgemein im Rahmen der Erfindung offenbart. Gleiche Bezugsziffern der Figuren beziehen sich auf gleiche Bauteile bzw. Merkmale. Es zeigen:
- Figur 1:: eine erste Ausführungsform eines erfindungsgemäßen Behälters im Querschnitt (Fig. 1a) und in Detailansicht (Fig. 1b),
- Figur 2:: eine zweite Ausführungsform eines erfindungsgemäßen Behälters,
- Figur 3:: eine schematische Darstellung eines Schichtmaterials zum Aufbau eines Behälter- und/oder Deckelkorpus für einen erfindungsgemäßen Behälter, insbesondere auch nach den Figuren 1 und 2.

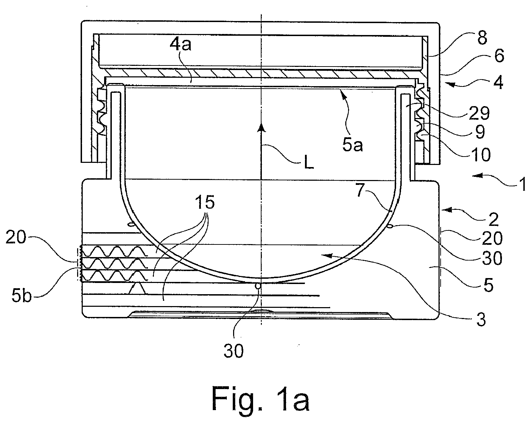

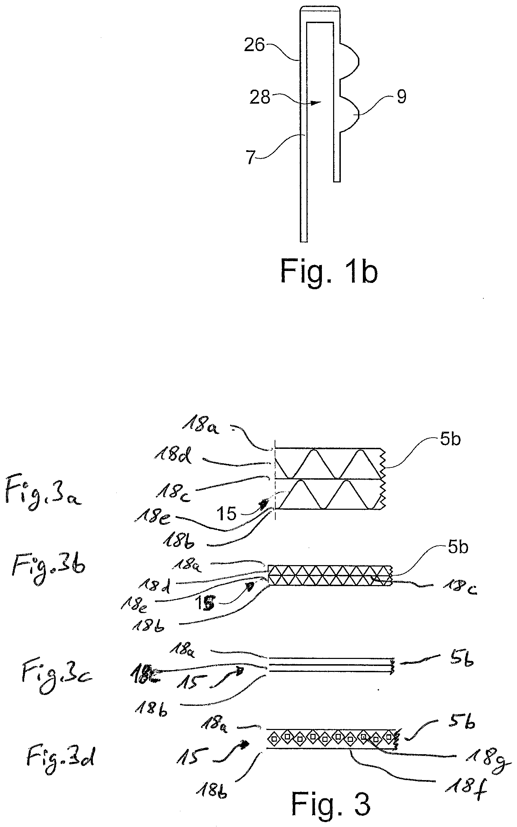

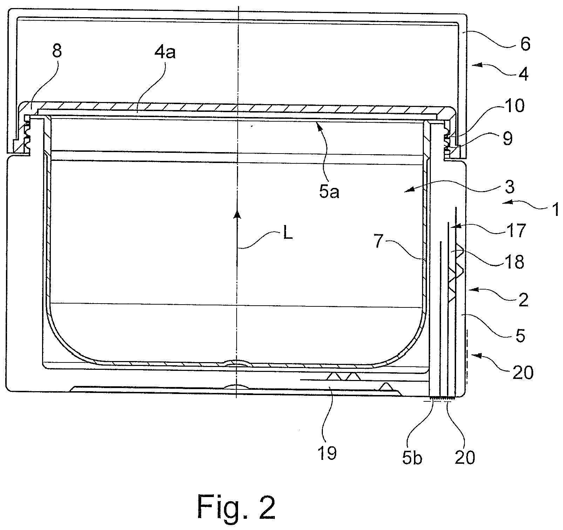

Die Figuren 1 und 2 zeigen erfindungsmäße Verpackungen 1 für Kosmetika, insbesondere fluide, pastöse oder gelförmige Kosmetika.

Die Verpackung 1 weist einen Behälter 2 mit einem Aufnahmeraum 3 für die Kosmetikzubereitung und einen Verschlussdeckel 4 zum Verschließen des Aufnahmeraumes 3 auf. Behälter 2 und Deckel 4 sind durch korrespondierende Befestigungsmittel 9, 10 reversibel aneinander festlegbar und der Behälter 2 reversibel verschließbar ist. Die Befestigungsmittel sind hier als korrespondierende Schraubgewinde ausgebildet. Der Behälter 2 weist einen Behälterkorpus 5 und der Deckel 4 einen Deckelkorpus 6 auf. Der Aufnahmeraum 3 des Behälterkorpus 5 weist eine mediendichte Innenauskleidung 7 auf. Der Behälterkorpus, die Innenauskleidung 7 und der Deckelkorpus 6 bestehen jeweils unabhängig voneinander, zumindest im Wesentlichen aus einem recycelten und/oder biologisch abbaubarem Material, was hier für jedes der drei genannten Teile von Behälter, Deckel und Auskleidungsteil der Fall ist.

Das recycelte Material von Behälter, Deckel und Auskleidungsteil besteht hierbei zumindest teilweise oder vollständig aus der Gruppe einem recyceltem natürlichen Material, insbesondere organischem Material wie Pflanzenmaterial, wobei das Material der genannten drei Teile voneinander verschieden oder gleich sein kann. Alternativ kann das jeweilige Material ein recyceltes Kunststoffmaterial sein, insbesondere ein biologisch abbaubares wie ein kompostierbares Material und/oder insbesondere ein solches auf Basis nachwachsender Rohstoffe.

Behälter, Deckel und Auskleidungsteil bestehen jeweils einzeln bzw. mehrere derselben oder auch alle drei zusammen bzw. das Gebinde insgesamt aus einem biologisch abbaubarem, insbesondere kompostierbarem, Material. Das Material ist hier aus nachwachsenden Rohstoffen gewonnen, vorzugsweise ohne chemische Modifizierung desselben, ohne hierauf beschränkt zu sein. Das Material gemäß den Ausführungsbeispielen ist beispielsweise ein solches auf Basis von Zellulose, insbesondere Zellulosefasern, oder Stärkeblends oder einer Kombination von beiden. Das Material jedes der genannten Teile des Gebindes einzeln oder das Gebinde insgesamt kann aber zumindest im Wesentlichen oder vollständig auch aus einem anderen im Rahmen der Erfindung einsetzbaren Material bestehen jedes der Teile beispielsweise ausgewählt aus der Gruppe von Pflanzenbestandteilen, makroskopischer Teile von Pflanzen, Pflanzenfasermaterial, Zellulose oder Zellstoff, Gras oder Bestandteile desselben, Stroh, Holzbestandteile, Getreide, Materialien auf Proteinbasis, Polymichsäure oder Kombinationen derselben. Das kompostierbare Material kann auch aus einem Recyclingvorgang stammen. Insbesondere können Behälter, Deckel und Auskleidungsteil aus einem Fasermaterial bestehen, welches aus Altpapier oder Fasern aus recycelten Textilien gewonnen wurde.

Die Ausführungsbeispiele werden hier anhand von kompostierbarem Material beschrieben, welches insbesondere die Erfordernisse der DIN EN 13432 und/oder ASTM D 6400 erfüllen kann. Die Ausführungsbeispiele können aber entsprechend allgemein für biologisch abbaubare und/oder recycelbare Materialien gelten. Im Falle recycelbarer Materialien können diese insbesondere biologisch abbaubar, vorzugsweise kompostierbar, sein und/oder solche auf Basis nachwachsender Rohstoffe.

Die Innenauskleidung 7 des Behälteraufnahmeraums ist als Innenauskleidungsteil ausgebildet, welches an dem Behälterkorpus 5 festgelegt ist. Ferner weist der Deckelkorpus 6 ebenfalls eine Innenauskleidung 8 auf, welche hier bevorzugt ebenfalls als Innenauskleidungsteil ausgebildet ist und an dem Deckelkorpus festgelegt ist. Ferner weist der Deckel 4 eine Einlage 4a auf, welche in die Deckelmulde bzw. die Innenauskleidung eingelegt ist und dazu dient, den Aufnahmeraum sicher zu verschließen, auch wenn eine ursprüngliche Siegelfolie zum Verschluss des Aufnahmeraumes entfernt wurde. Die Deckeleinlage besteht hier aus einem komprimierbaren Material. Die Deckeleinlage kann ebenfalls aus einem recyceltem und/oder kompostierbaren Material bestehen.

Das Innenauskleidungsteil von Behälter 2 und/oder Deckel 4 ist jeweils form- und/oder kraftschlüssig an dem Behälterkorpus 5 bzw. dem Deckelkorpus 6 festgelegt.

Der Behälterkorpus 5 und der Deckelkorpus 6 nach Figur 1 bestehen zumindest teilweise oder hier praktisch vollständig aus vorgefertigten Schichtabschnitten 15 eines recycelten und/oder kompostierbaren Materials, wobei diese Abschnitte dauerhaft miteinander verbunden sind. Dies wird hier nur für den Behälter dargestellt. Die Schichtenabschitte 15 sind hier aus Pappe, im speziellen Wellpappe ausgebildet, können aber auch aus einem anderen Material im Rahmen der Erfindung bestehen. Die Schichtabschnitte 15 sind entlang der Korpushauptachse bzw. Korpuslängsachse L gestapelt, es kann aber gegebenenfalls der Korpus auch durch quer bzw. senkrecht zur Achse L gestapelte Abschnitte aufgebaut werden. Die Schichtenabschnitte können allgemein im Rahmen der Erfindung auch einen kompakten Behälter- und/oder Deckelkorpus ausbilden, welcher also zumindest im Wesentlichen frei von Hohlräumen ist, bis auf die Aufnahmeräume für die jeweilige Auskleidung.

Die Ausführungsbeispiele können jeweils auch in Abwandlungen ausgeführt sein, bei welchem der Behälter- und/oder Deckelkorpus nicht aus einem Schichtenmaterial hergestellt ist sondern beispielsweise aus einem zumindest im Wesentlichen homogenen Material, wie beispielsweise als homogener Formkörper. Der Formkörper kann beispielsweise als Faserformköper oder als Gußteil oder auf andere geeignete Weise hergestellt sein.

Nach Figur 2 bestehen der Behälterkorpus 5 und der Deckelkorpus 6 zumindest teilweise oder hier praktisch vollständig aus einem Wickel 17 eines vorgefertigten Schichtmaterials bzw. einer vorgefertigten Materialschicht 18 aus einem recycelten und/oder kompostierbaren Material. Der Wickel 17 besteht hier zumindest im Wesentlichen oder praktisch vollständig aus Pappe, im speziellen Wellpappe, gegebenenfalls aber auch aus einem anderen Material im Rahmen der Erfindung. Die einzelnen Wicklungen des Wickels sind dauerhaft miteinander verbunden, hier verklebt, insbesondere vollflächig verklebt. Der Wickel kann aber auch dadurch zusammengehalten werden, dass eine obere und/oder untere Decklage vorgesehen sind, an welcher die Schmalseiten der Wickellage fixiert sind, insbesondere durch Verkleben. Dies wird hier nur für den Behälter dargestellt. Der Wickel ist hier bodenseitig durch die Einsatzlage 19 geschlossen, die Einsatzlage kann aber auch zur Korpusaussenseite gezogen und damit als Decklage ausgebildet sein. Alternativ kann der Korpus von Behälter und/oder Deckel aus ineinander eingesetzten Röhren aufgebaut sein, welche jeweils eine Schichtlage ausbilden. In Bezug auf die Festlegung der Röhren kann dasselbe wie für den Wickel ausgeführt gelten.

Behälterkorpus 5 und/oder Deckelkorpus 6, hier beide, bestehen im speziellen zumindest teilweise oder hier praktisch vollständig Fasermaterial, hier Wellpappe. Durch die Wellpappe wird eine makroskopische Hohlraumstruktur ausgebildet, die aber auch durch andere Ausgestaltung des den jeweiligen Korpus ausbildendem Materials erzeugt sein kann, beispielsweise durch mäandrierend abgelegte Materialschichten mit Zwischenräumen zwischen dem Mäandern benachbarten Schichten, zusammenfügen einzelner, außenseitig aneinanderstoßender Röhren, Schichten mit eingeformten Mulden, welche in Bezug auf benachbarten Schichten nicht oder nur teilweise ineinander eingreifen oder dergleichen. Die Hohlräume der Hohlraumstruktur erstrecken sich hierbei bis zu der Außenseite des jeweiligen Korpus. Zumindest ein Teilbereich der außenseitigen Oberfläche von Behälterkorpus 5 und/oder Deckelkorpus 6, hier der gesamte Bereich desselben, an welchem außenseitig eine Hohlraumstruktur ausgebildet ist, ist durch mechanische Verteilung des Fasermaterials geschlossen ausgebildet, wie in Figur 3 schematisch visualisiert ist. Die mechanische Verteilung des Fasermaterials ist hier derart erfolgt, dass die Fasern benachbarten Schichten miteinander verfilzen und dadurch eine vergleichmäßigte, im speziellen geschlossene Oberfläche der Korpusbereiche mit oberflächlich angrenzender Hohlraumstruktur ausbilden, hier durch die oberflächlichen Korpusbereiche 5b. Diese Ausgestaltung des Korpus ist aber nicht auf Korpusmaterialien mit makroskopischer Hohlraumstruktur beschränkt sondern allgemein einsetzbar, um den Übergang benachbarter Materialschichten an der Korpusoberfläche zu vergleichmäßigen. Allgemein im Rahmen der Erfindung kann auch der durch die mechanische Verteilung ausgebildete, verfilzte Bereich der Korpusoberfläche mit einer Imprägnierung und/oder Beschichtung 20 versehen sein, auch wenn dies nicht zwingend erforderlich ist. Es versteht sich, dass dies bei den Ausführungsbeispielen der Figuren 1 und 2 realisiert sein.

Alternativ können der Behälterkorpus 5 und/oder der Deckelkorpus 6 teilweise oder zumindest zu einem wesentlichen Teil als Faserformteil ausgebildet sein.

Die Innenauskleidungen 7, 8 von Behälterkorpus und/oder Deckelkorpus, hier beide, sind hier als Innenauskleidungsteil ausgebildet ist. Das jeweiligen Innenauskleidungsteil ist nach diesem Ausführungsbeispiel als Faserformkörper ausgebildet, kann aber gegebenenfalls auch als Formkörper aus einem recyceltem und/oder kompostierbaren Kunststoffmaterial, als Träger, insbesondere einem solchem aus recyceltem und/oder kompostierbaren Material, mit einer geeigneten Trägerbeschichtung oder auf andere geeignete Weise ausgeführt sein.

Das Korpusmaterial von Behälter 2 und/oder Deckel 4 ist hier zumindest oberflächlich, hier nur oberflächlich, mit einem Imprägnierungsmittel und/oder einem Beschichtungsmittel 20 versehen. Hierdurch kann bspw. die Abriebfestigkeit des Korpusmaterials erhöht werden.

Das Innenauskleidungsteil 7, 8 von Behälter 2 und/oder Deckel 4 ist zumindest oberflächlich, hier nur oberflächlich, mit einem Imprägnierungsmittel und/oder einem Beschichtungsmittel 20 versehen. Dies gilt insbesondere in Ausbildung des jeweiligen Auskleidungsteils aus einem Fasermaterial, insbesondere Faserformkörper. Hierdurch kann die Abriebfestigkeit des Materials des Auskleidungsteils erhöht werden, insbesondere auch dessen Gleitreibung verbessert werden, was bei Ausbildung der Befestigungsmittel von Behälter und Deckel als Schraubgewinde von besonderer Bedeutung ist. Insbesondere sind auch die Befestigungsmittel 9, 10 von Behälterkorpus 5 und Deckelkorpus 6, welche aus einem gebundenen partikelförmigen Material, einschließlich Fasermaterial, bestehen können, zumindest oberflächlich imprägniert und/oder beschichtet ist, was insbesondere zur Verbesserung der Gleitreibung erfolgen kann, um das Öffnen und Schließen des Gebindes zu erleichtern und Abrieb zu minimieren.

Die Innenauskleidung 7 des Behälters ist als Innenauskleidungsteil ausgebildet, welches eine Mulde 25 zur Aufnahme der Kosmetikzubereitung mit einem oberen Muldenrand 26 aufweist. Am oberen Muldenrand ist eine zum Muldenboden 27 hin offene U-förmige Rinne 28 ausgebildet. Im Bereich des oberen Muldenrandes 26 sind Befestigungsmittel 9 des Behälters angeordnet, welche mit korrespondierenden Befestigungsmitteln 10 des Deckels 4 zusammenwirken, hier in Form eines Schraubgewindes. Der Behälterkorpus 5 greift mit einem Teilbereich 5c in die U-förmige Rinne 28 des Innenauskleidungsteils ein, und dient hierbei zugleich der zusätzlichen oder gegebenenfalls alleinigen Befestigung der Auskleidungsteils an dem Korpus. Zugleich wir hierdurch der obere Korpusrand durch die äußere Wandung der U-förmigen Rinne 28 geschützt. Das Innenauskleidungsteil wirkt hier im Bereich der U-förmigen Rinne 28 mit dem in diese eingreifenden Material bzw. Bereich des Behälterkorpus 5 kraft- und/oder formschlüssig zusammen, bspw. in Ausbildung eines Klemmsitzes. Es versteht sich, dass das Auskleidungsteil zusätzlich durch Verkleben an dem Korpus festgelegt sein kann.

Ferner können die Innenauskleidung 7, 8 von Behälter und/oder Deckel als Innenauskleidungsteil ausgebildet sein und der jeweilige Korpus 5, 6 mit dem jeweiligen Innenauskleidungsteil wechselseitig ineinandergreifende Vorsprünge bzw. Vertiefungen 29, 30 zur Halterung des Innenauskleidungsteils an dem jeweiligen Korpus aufweisen. Die Vorsprünge und Vertiefungen können an der Umfangsaußenseite des Auskleidungsteils und/oder dem außenseitig am Boden der Mulde 25 desselben angeordnet sein. Hierdurch ist das Auskleidungsteil besonders sicher an dem Korpus festgelegt und der Einsatz von Klebstoffen kann verringert oder vermieden werden.

Figur 3 zeigt schematische Darstellungen von Schichtmaterialien zum Aufbau eines Behälter- und/oder Deckelkorpus für einen erfindungsgemäßen Behälter, insbesondere auch gemäß den Figuren 1 und 2. Behälter- und/oder Deckelkorpus können jeweils aus einem der in Figur 3 gezeigten Schichtmaterialien oder aus einer Kombination derselben teilweise, zumindest im Wesentlichen vollständig oder vollständig bestehen. Behälter- und/oder Deckelkorpus können jeweils eines der in Figur 3 dargestellten Schichtmaterialien und gegebenenfalls zumindest ein weiteres, anders aufgebautes, Schichtmaterial umfassen.

Figur 3 zeigt verschiedenen Varianten von Schichtabschnitten 15 aus jeweils einem Schichtmaterial. Das den Schichtabschnitt ausbildende Schichtmaterial kann jeweils mehrere der dargestellten Schichten in einer Schichtenabfolge umfassen, um ein Schichtmaterial auszubilden. Nach den Fig. 3a-d weist das Schichtmaterial jeweils mehrere Materialschichten 18 auf, im Speziellen eine Materialschicht als obere bzw. als untere Decklage 18a,18b und zumindest eine oder mehrere Zwischenschichten. Gegebenenfalls kann das Schichtmaterial auch nur eine der beiden Schichten von oberer und unterer Decklage 18a,18b umfassen, bspw. nur eine obere Decklage. Es versteht sich, dass die einzelnen Materiallagen der Schichten nach den Fig. 3a-d miteinander verklebt sein können. Der jeweilige Schichtabschnitt kann aus ausbildende Schichtmaterial

Nach Figur 3a,b weist das den Schichtabschnitt 15 ausbildende Schichtmaterial jeweils eine bei eben ausgebreitetem Schichtmaterial ebene obere Decklage 18a, untere Decklage 18b und Zwischenlage 18c auf, welche ebenfalls vorzugsweise eben ausgeführt sind, gegebenenfalls aber beispielsweise auch eine gewisse Welligkeit aufweisen können. Zwischen diesen Lagen sind Materialschichten 18d, 18e in Form von Welllagen angeordnet, beispielsweise in Ausbildung einer Wellpappe. In Figur 3a sind die Wellagen 18d,18e nicht deckungsgleich bzw. mit einem Seitenversatz angeordnet, in Figur 3b sind die Welllagen spiegelbildlich zu den Zwischenlage 18c angeordnet. Die Korpusoberflächenbereiche 5b der Materialschichten, welche eine seitliche Begrenzung derselben ausbilden, sind als Materialverdichtung bzw. Verfilzung ausgebildet, unter Ausbildung einer vergleichmäßigten oder geschlossenen Fläche, welche bei dem Behälter und/oder Deckelkorpus eine Außenfläche derselben darstellen kann. Die Materialverdichtung bzw. Verfilzung ist hier deart ausgebildet, dass die vergleichmäßigte oder geschlossene Fläche blickdicht oder mediendicht ist, so dass ein flüssiges Material wie beispielsweise ein Klebstoff auf diese Oberfläche aufbringbar ist oder Fremdstoffe, insbesondere partikelförmige, wie Staub nicht durch die Oberfläche in das Innere der Materialschicht eindringen können.

Fig. 3c zeigt ein Schichtmaterial aus drei Materialschichten 18, welche beispielsweise mittels eines Klebstoffes (nicht dargestellt), mit einander verbunden sein können.

Fig. 3d zeigt ein einen Schichtabschnitt ausbildendes Schichtmaterial, wobei der Schichtabschnitt eine obere und eine untere Decklage 18a,18b aufweist. Die Zwischenschicht 18f ist durch Fasern mit Hohlräumen 18g ausgebildet. Die Hohlräume können makroskopisch oder mikroskopisch sein. Auch hier kann die seitliche Begrenzung der Schicht durch Verfilzung vergleichmäßigt oder geschlossen sein.

### Bezugszeichenliste

- 1: Verpackung
- 2: Behälter
- 3: Aufnahmeraum
- 4: Deckel
- 4a: Deckeleinlage
- 5: Behälterkorpus
- 5a: Siegelfolie
- 5b: Korpusoberflächenbereich
- 6: Deckelkorpus
- 7: Innenauskleidung Behälter
- 8: Innenauskleidung Deckel
- 9: Befestigungsmittel Behälter
- 10: Befestigungsmittel Deckel
- 15: Schichtabschnitt
- 17: Wickel
- 18: Materialschicht
- 20: Imprägnierungsmittel / Beschichtungsmittel
- 25: Mulde
- 26: Muldenrand
- 27: Muldenboden
- 28: U-förmige Rinne
- 29: Korpusbereich
- 30: Vorsprung
- L: Korpushauptachse

## Patentansprüche

1. Verpackung (1) für insbesondere fluide, pastöse oder gelförmige Kosmetika, mit einem Behälter (2) mit einem Aufnahmeraum (3) für die Kosmetikzubereitung und mit einem Verschlussdeckel (4) zum Verschließen des Aufnahmeraumes (3), wobei Behälter (2) und Deckel (4) durch korrespondierende Befestigungsmittel (9, 10) reversibel aneinander festlegbar und der Behälter (2) reversibel verschließbar ist, wobei der Behälter (2) einen Behälterkorpus (5) und wobei der Deckel (4) einen Deckelkorpus (6) aufweist,
**dadurch gekennzeichnet,**
**dass** der Aufnahmeraum (3) des Behälterkorpus (5) eine mediendichte Innenauskleidung (7) aufweist,
und **dass** der Behälterkorpus, die Innenauskleidung (7) und der Deckelkorpus (6) jeweils unabhängig voneinander oder in Kombination miteinander zumindest im Wesentlichen aus einem recycelten und/oder biologisch abbaubarem Material bestehen.

2. Verpackung nach Anspruch 1, **dadurch gekennzeichnet,**
(i) **dass** das recycelte Material zumindest teilweise oder vollständig ausgewählt ist aus der Gruppe von recyceltem Material auf Basis nachwachsender Rohstoffe und recyceltem Kunststoff oder Kombinationen derselben, und/oder
(ii) **dass** das biologisch abbaubare Material zumindest teilweise oder vollständig ein kompostierbares Material ist.

3. Verpackung nach einem der Ansprüche 1 bis 2, **dadurch gekennzeichnet, dass** das biologisch abbaubare Material zumindest teilweise oder vollständig ausgewählt ist aus der Gruppe von Pflanzenbestandteilen, makroskopischer Teile von Pflanzen, Pflanzenfasermaterial, Zellulose oder Zellstoff, Gras oder Bestandteile desselben, Stroh, Holzbestandteile, Getreide oder Kombinationen derselben.

4. Verpackung nach einem der Ansprüche 1 bis 3, **dadurch gekennzeichnet, dass** die Innenauskleidung (7) des Behälteraufnahmeraums als Innenauskleidungsteil ausgebildet ist, welches an dem Behälterkorpus (5) festgelegt ist und/oder dass der Deckelkorpus (6) eine Innenauskleidung aufweist, welche vorzugsweise als Innenauskleidungsteil ausgebildet ist.

5. Verpackung nach einem der Ansprüche 1 bis 4, **dadurch gekennzeichnet, dass** der Behälterkorpus (5) und/oder der Deckelkorpus (6) zumindest teilweise oder zu einem wesentlichen Teil aus vorgefertigten Schichtabschnitten (15) eines recycelten und/oder biologisch abbaubaren Materials besteht, welche Abschnitte dauerhaft miteinander verbunden sind.

6. Verpackung nach einem der Ansprüche 1 bis 5, **dadurch gekennzeichnet, dass** der Behälterkorpus (5) und/oder Deckelkorpus (6) zumindest teilweise oder zu einem wesentlichen Teil aus einem Wickel (17) oder ineinander gesteckten Röhren eines vorgefertigten Schichtmaterials aus einem recycelten und/oder biologisch abbaubaren Material besteht.

7. Verpackung nach einem der Ansprüche 1 bis 6, **dadurch gekennzeichnet, dass** der Behälterkorpus (5) und/oder Deckelkorpus (6) zumindest teilweise oder vollständig aus einem Fasermaterial, besteht, und dass bei zumindest einem Teilbereich oder der gesamten außenseitigen Oberfläche von Behälterkorpus (5) und/oder Deckelkorpus (6) durch mechanische Verteilung des Fasermaterials der Übergang benachbarter Schichten vergleichmäßigt ist.

8. Verpackung nach Anspruch 7, **dadurch gekennzeichnet, dass** der Behälterkorpus (5) und/oder Deckelkorpus (6) zumindest teilweise oder vollständig aus einem Fasermaterial besteht, welches eine makroskopische Hohlraumstruktur aufweist und die Hohlraumstruktur sich zumindest an einem Teilbereich von Behälterkorpus (5) und/oder Deckelkorpus (6) bis zu dessen Außenseite erstreckt, und dass durch die mechanische Vergleichmäßigung die oberflächlichen Hohlräume zumindest teilweise oder vollständig geschlossen ausgebildet sind.

9. Verpackung nach einem der Ansprüche 1 bis 8, **dadurch gekennzeichnet,**
(i) **dass** der Behälterkorpus (5) und/oder Deckelkorpus (6) teilweise oder zumindest zu einem wesentlichen Teil als Faserformteil ausgebildet ist,
und/oder
(ii) **dass** die Innenauskleidung (7) von Behälter- und/oder Deckelkorpus (6) als Innenauskleidungsteil ausgebildet ist, welches einen Faserformkörper darstellt.

10. Verpackung nach einem der Ansprüche 1 bis 9, **dadurch gekennzeichnet, dass** der Korpus von Behälter und/oder Deckel eine Außenverkleidung in Form eines Faserformteils aufweist, in welche ein Korpuskern eingesetzt ist, und das Außenverkleidung und Kern verliersicher miteinander verbunden sind.

11. Verpackung nach einem der Ansprüche 1 bis 10, **dadurch gekennzeichnet,**
(i) **dass** das Korpusmaterial von Behälter (2) und/oder Deckel (4) zumindest oberflächlich mit einem Imprägnierungsmittel und/oder einem Beschichtungsmittel versehen ist und/oder
(ii) **dass** das Innenauskleidungsteil von Behälter (2) und/oder Deckel (4) zumindest oberflächlich mit einem Imprägnierungsmittel und/oder einem Beschichtungsmittel (20) versehen ist.

12. Verpackung nach einem der Ansprüche 1 bis 11, **dadurch gekennzeichnet, dass** die Befestigungsmittel von Behälterkorpus (5) und/oder Deckelkorpus (6) zumindest zu einem wesentlichen Teil oder vollständig aus einem gebundenen partikelförmigen Material, einschließlich Fasermaterial, besteht und dass das partikelförmige Material zumindest oberflächlich imprägniert und/oder beschichtet ist.

13. Verpackung nach einem der Ansprüche 1 bis 12, **dadurch gekennzeichnet, dass** die Innenauskleidung (7) des Behälters als Innenauskleidungsteil ausgebildet ist, welches eine Mulde (25) zur Aufnahme der Kosmetikzubereitung mit einem oberen Muldenrand (26) aufweist, wobei am oberen Muldenrand eine zum Muldenboden hin offene U-förmige Rinne (28) ausgebildet ist, dass im Bereich des oberen Muldenrandes (26) Befestigungsmittel (9) des Behälters angeordnet sind, welche mit korrespondierenden Befestigungsmitteln (10) des Deckels (4) zusammenwirken.

14. Verpackung nach Anspruch 13, **dadurch gekennzeichnet, dass** der Behälterkorpus (5) in die U-förmige Rinne (28) des Innenauskleidungsteils eingreift.

15. Verpackung nach einem der Ansprüche 1 bis 14, **dadurch gekennzeichnet, dass** die Innenauskleidung (7) des Behälterkorpus (5) und/oder Deckelkorpus (6) als Innenauskleidungsteil ausgebildet ist und dass der Behälterkorpus (5) bzw. Deckelkorpus (6) mit dem jeweiligen Innenauskleidungsteil wechselseitig ineinandergreifende Vorsprünge bzw. Vertiefungen zur Halterung des Innenauskleidungsteils an dem Behälterkorpus (5) bzw. Deckelkorpus (6) aufweisen.

16. Verpackung nach einem der Ansprüche 1 bis 15, **dadurch gekennzeichnet,**
(i) **dass** der Behälterkorpus (5) und/oder der Deckelkorpus (6) mit korrespondierenden Formschlussmitteln oder Kraftschlussmitteln zum Verschließen des Behälters durch den Deckel (4) versehen sind,
und/oder
(ii) **dass** der Bereich von Behälterkorpus (5) und/oder Deckelkorpus (6) mit dem jeweiligen Formschlussmittel oder dem jeweiligen Kraftschlussmittel zumindest im Wesentlichen aus einem partikelförmigen Material, einschließlich Fasermaterial, besteht und dass das Material von Behälterkorpus (5) und/oder Deckelkorpus (6) im Bereich der Befestigungsmittel mit einem abriebvermindernden und/oder gleitreibungsvermindernden Material beschichtet oder imprägniert ist.
